# EUROPEAN PATENT SPECIFICATION

(11) **EP 2 169 766 B1**
(45) Date of publication and mention of the grant of the patent: **28.09.2016**
(21) Application number: 09164826.1
(22) Date of filing: 07.07.2009
(51) Int. Cl.: H01Q 1/38, H01Q 9/04, H01Q 9/42, H01Q 1/22

(54) **Antenna and reader/writer device**
Antenne und Lese-/Schreibgerät
Antenne et dispositif de lecture/écriture

(30) Priority: 30.09.2008 JP 2008255312
(43) Date of publication of application: 31.03.2010
(73) Proprietor: Fujitsu Ltd., Kawasaki-shi, Kanagawa 211-8588 (JP)
(72) Inventor: Kai, Manabu, Kawasaki-shi Kanagawa 211-8588 (JP); Ninomiya, Teruhisa, Kawasaki-shi Kanagawa 211-8588 (JP)
(74) Representative: Wilding, Frances Ward

(56) References cited:
- EP-A- 0 840 251
- EP-A- 1 154 518
- EP-A- 1 764 866
- WO-A-2004/045023
- WO-A-2006/050408
- WO-A1-2004/062032
- DE-A1-102005 049 820
- US-A1- 2006 132 361
- US-A1- 2007 069 957

## Description

### FIELD

The embodiments discussed herein are directed to an antenna and a reader/writer device.

### BACKGROUND

Recently, as a non-contact automatic identification technology, radio frequency identification (RFID) has been widely used. In the RFID, non-contact data communication is performed through radio waves between an integrated circuit (IC) tag including a semiconductor memory, and a reader/writer device that reads and writes data from and to the semiconductor memory of the IC tag.

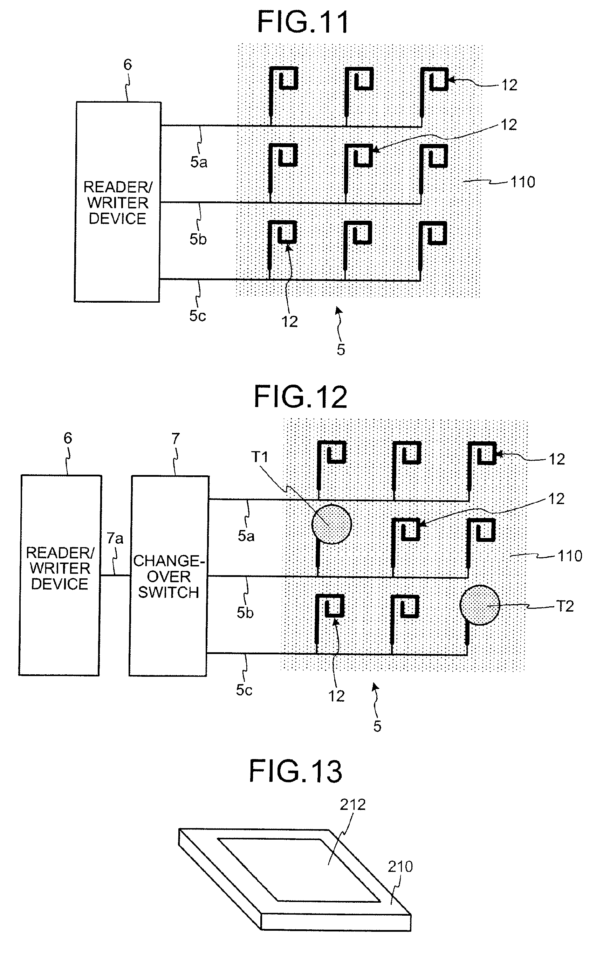

The reader/writer device in the RFID includes a communication antenna (reader/writer antenna) that radiates a radio wave towards an IC tag. As illustrated in FIG. 13, as such a communication antenna, a patch antenna including a rectangular conductor pattern 212 for radiating a radio wave on a substrate 210 made of a dielectric substance is generally used.

For example, when such a patch antenna is used to identify a position of a small IC tag having a diameter of about 40 millimeters, the patch antenna also may be downsized to correspond with the IC tag.

However, simply downsizing the patch antenna decreases the radiation power to the IC tag, making position identification of the IC tag difficult. To avoid this problem, a dielectric substance having a high dielectric-constant such as a ceramic material may be used as the substrate of the patch antenna. However, the dielectric substance such as a ceramic material is expensive, and thus the use of the dielectric substance increases the manufacture cost. A glass epoxy resin such as FR-4, which is a dielectric substance less expensive than ceramic materials, may be used as the substrate of the patch antenna, but FR-4 has a lower dielectric constant than ceramic materials. Thus the entire antenna would need to be upsized to obtain the same radiation power as a ceramic material.

To ensure sufficient radiation power to an IC tag, various types of antennas including modified conductor patterns on their substrates have been proposed. For example, an antenna including a conductor pattern having a meander-lined shape is proposed (see Published Japanese Translation of PCT International Application No. 2008-519571). The surface area of the conductor relative to the substrate is made as large as possible by forming the conductor pattern to be meandered, thereby preventing a decrease in its radiation power.

However, for this antenna, if an inexpensive substrate having a low dielectric-constant such as an FR-4 substrate is used, the length of the conductor pattern to ensure sufficient radiation power to an IC tag may be increased, thereby increasing the size in the lengthwise direction of the conductor pattern. As a result, the size of the entire antenna is increased.

WO 2004/062032 discloses an antenna having a conductive element in which a primary branch and a secondary branch are separated by a bend segment and the signal and ground fees are positioned adjacent each other on a common portion of the conductive element.

WO 2006/05408 discloses a near field linear element microstrip antenna which is configured such that a localised electric E field emitted by the antenna at n operating wavelength resides substantially within a zone defined by the near field.

European patent publication EP1154518A2 discloses an antenna having an earth plate and a radiator positioned parallel to the earth plate and electrically coupled to it at one end, with a voltage minimum obtained at this end at the lower resonance frequency of the antenna, a voltage voltage maximum obtained at the free end of the radiator, which is capacitively coupled to a point along the radiator, for providing a further resonance frequency which is less than triple the first resonance frequency.

International patent publication WO2004/062032A1 discloses a conductive element with a primary branch and a secondary branch are separated by a bend segment and the signal and ground feeds are positioned adjacent each other on a common portion of the conductive element. The frequencies in the high band may be at least about twice that of the frequencies in the low band. The branches and bend segment are constructed such that the primary branch radiates at both high and low band operation.

It is desirable to solve the above described problems in the conventional technologies. It is also desirable to provide an antenna and a reader-writer device using an inexpensive substrate having a low dielectric constant without significant upsizing and reduction in radiation power.

### SUMMARY

According to embodiments of an aspect of the invention, there is provided an antenna connectable to a reader-writer device as claimed in claim 1.

The desirable features and advantages of the invention will be realized and attained by means of the elements and combinations particularly pointed out in the claims.

### BRIEF DESCRIPTION OF DRAWINGS

Preferred features of the present invention will now be described, purely by way of example, with reference to the accompanying drawings, in which:-
FIG. 1 is a perspective view of a configuration of an antenna according to an embodiment of the present invention;
FIG. 2 is a schematic diagram of a state in which an IC tag is placed on the antenna according to the embodiment;
FIG. 3 is a plan view of the antenna illustrated in FIG. 1;
FIG. 4 is a graph indicating a current distribution along length directions of a conductor pattern;
FIG. 5 is a graph indicating an electric field distribution along the length directions of the conductor pattern;
FIG. 6 is a schematic diagram of a combined state of electric fields generated at a zero point and at an intersection point;
FIG. 7 is a graph indicating a relation between power supplied from the antenna to the IC tag and a frequency;
FIG. 8 is a diagram of a modified example of the antenna according to the embodiment;
FIG. 9 is a diagram of another modified example of the antenna according to the embodiment;
FIG. 10 is a diagram indicating a state in which the antenna according to the embodiment is connected to a reader/writer device;
FIG. 11 is a schematic diagram of an application example of the antenna including the conductor pattern according to the embodiment;
FIG. 12 is a schematic diagram of another application example of the antenna including the conductor pattern according to the embodiment ; and
FIG. 13 is a perspective view of a configuration of a patch antenna.

### DESCRIPTION OF EMBODIMENTS

Exemplary embodiments of an antenna and a reader-writer device according to the present invention will be explained below in detail with reference to the accompanying drawings.

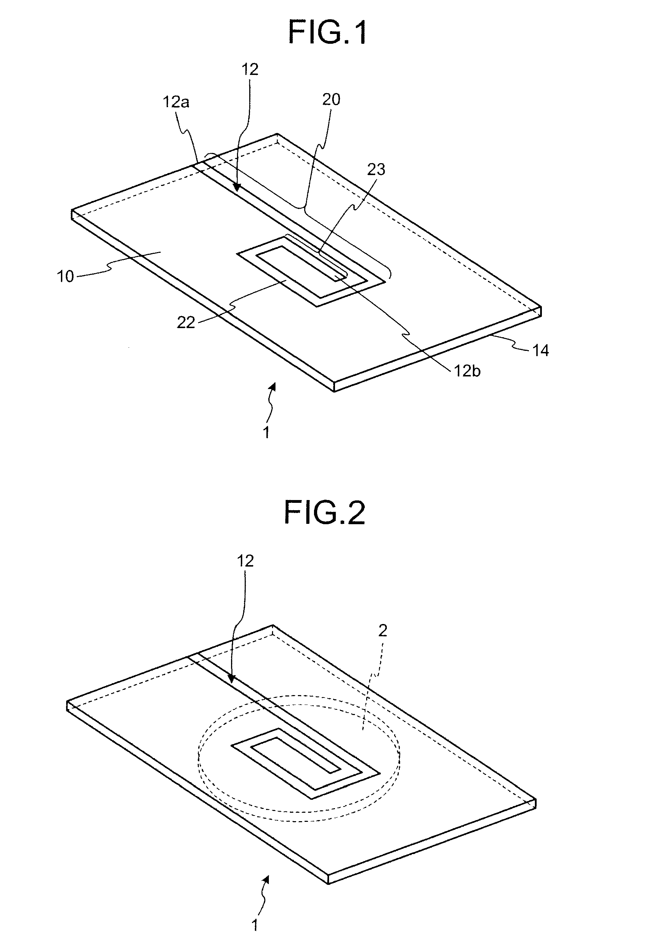

A configuration of an antenna forming part of an embodiment of the present invention is explained first. FIG. 1 is a perspective view of the configuration of an antenna 1 forming part of the embodiment, and FIG. 2 is a schematic diagram of a state in which an IC tag 2 is placed on the antenna 1.

As illustrated in FIG. 1, the antenna 1 includes a substrate 10 made of a dielectric substance such as a glass epoxy resin, e.g., FR-4, a conductor pattern 12 formed on the substrate 10, and a ground (GND) 14 formed on an opposite surface of the conductor pattern 12 of the substrate 10. The conductor pattern 12 includes a feeding point 12a at an end of the conductor pattern 12 and an open end 12b at another end of the conductor pattern 12.

The antenna 1 is used in RFID, which is one of the automatic identification technologies, and is connected via the feeding point 12a to a reader-writer device (not illustrated) configured to be capable of communicating with the IC tag 2 including a semiconductor memory, as illustrated in FIG. 2. The reader/writer device transmits and receives radio waves via the antenna 1 to and from the IC tag 2 mounted on the antenna 1, thereby identifying a position of the IC tag 2 relative to the substrate 10 and reading and writing data from and to the semiconductor memory in the IC tag 2.

The conductor pattern 12 includes a feeding-side extension part 20 and a spiral part 22 connected to the feeding-side extension part 20, and is formed by bending a plural number of times a single continuous linear conductor.

The feeding-side extension part 20 extends linearly for a predetermined distance from the feeding point 12a. The spiral part 22 extends spirally from an end opposite to the feeding point 12a of the feeding-side extension part 20 to the open end 12b being a terminal end. In the present antenna, the spiral part is quadrangular in shape. Four sides of a near-quadrangle are formed by bending four times the linear conductor forming the conductor pattern 12.

By connecting the end of the feeding-side extension part 20 with the spiral shaped spiral part 22, the entire conductor pattern 12 formed becomes more compact as compared to forming the conductor pattern 12 meandered in shape. As a result, a size increase of the entire antenna 1 is suppressed.

The spiral part 22 includes the open end 12b on an open end of the spiral part 22, and forms an open-end-side extension part 23 positioned in juxtaposition with the feeding-side extension part 20. The open-end-side extension part 23 and the feeding-side extension part 20 in juxtaposition means that the open-end-side extension part 23 and the feeding-side extension part 20 are positioned adjacent to each other with a predetermined interval in between, and includes a placement in which the open-end-side extension part 23 and the feeding-side extension part 20 are parallel to each other.

Particularly, in the antenna 1, the feeding-side extension part 20 and the open-end-side extension part 23 are positioned in juxtaposition, such that upon power being fed to the feeding point 12a, a strong electric field is generated in a space between the feeding-side extension part 20 and the open-end-side extension part 23. A specific configuration of the feeding-side extension part 20 and the open-end-side extension part 23 is described below.

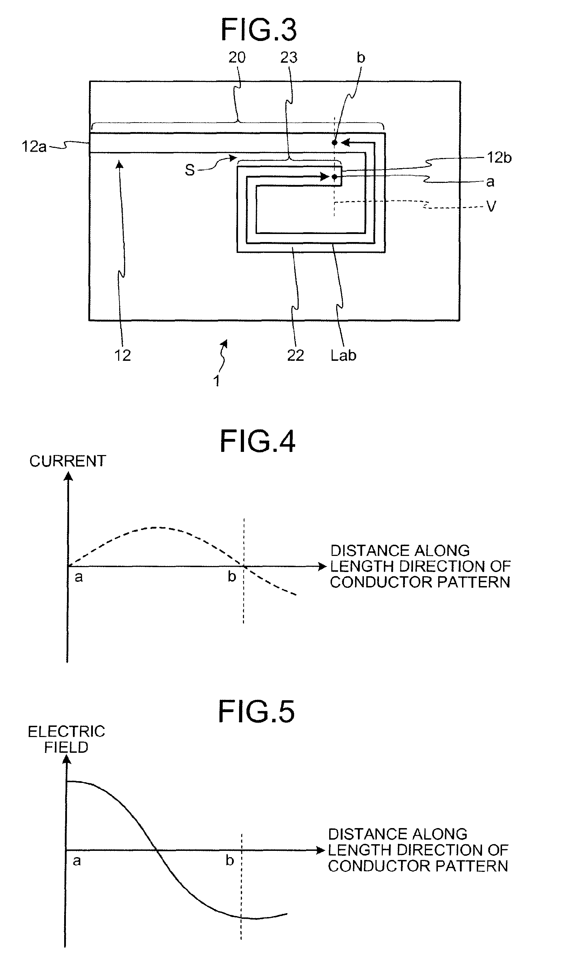

FIG. 3 is a plan view of the antenna 1 illustrated in FIG. 1. As illustrated in FIG. 3, when the feeding point 12a is fed with power, a current near the open end 12b becomes zero, and thus a zero point "a" at which the current is zero is generated close to the open end 12b of the open-end-side extension part 23. A line V that passes through the zero point "a" and that is perpendicular to the open-end-side extension part 23 is defined as a virtual straight line.

In the present antenna, a distance "Lab" from an intersection point "b" between the virtual straight line "V" and the feeding-side extension part 20 to the zero point "a" running along length directions of the conductor pattern 12, as indicated by a double-pointed arrow illustrated in FIG. 3, is set to a distance at which a strength of an electric field obtained as both of electric fields generated at the zero point "a" and the intersection point "b" are combined upon the feeding of power enables communications with the IC tag 2 mounted on the substrate 10.

Specifically, the distance "Lab" from the zero point "a" to the intersection point "b" running along the length directions of the conductor pattern 12 is set to a half of a wavelength λ of a radio wave used for the antenna 1. The wavelength λ of the radio wave used for the antenna 1 is selected in consideration of an influence of a wavelength compression effect due to the dielectric constant of the dielectric substance used, upon a wavelength in a free space of the radio wave used. Generally, the wavelength λ of the radio wave used for the antenna 1 is influenced by a dielectric constant ε of the substrate 10 on which the conductor pattern 12 is formed, and thus the wavelength λ is shorter than the wavelength in the free space of the radio wave used. The wavelength λ, though depending on the thickness of the substrate 10, is compressed to approximately 1/√ε on the conductor pattern 12.

For example, when the radio wave used is a UHF radio wave (approximately 952 megahertz) and the substrate 10 is FR-4 having a dielectric constant of 4.4, the wavelength in the free space is approximately 31 centimeters, and thus the wavelength λ of the radio wave used for the antenna 1 is approximately 15 centimeters on the conductor pattern 12. Accordingly, the distance "Lab" from the zero point "a" to the intersection point "b" running along the length directions of the conductor pattern 12 is set to 1/2·λ, i.e., approximately 7.5 centimeters.

By setting the distance "Lab" from the zero point "a" to the intersection point "b" running along the length directions of the conductor pattern 12 to a half of the wavelength λ of the radio wave used for the antenna 1, a phase of a current at the intersection point "b" is shifted by 180 degrees relative to a phase of the current at the zero point "a".

This shift is illustrated in FIG. 4. FIG. 4 is a graph indicating a current distribution along the length directions of the conductor pattern 12. As illustrated in FIG. 4, the phase of the current at the intersection point "b" is shifted by 180 degrees relative to the phase of the current at the zero point "a", and thus, similarly to the zero point "a", the current at the intersection point "b" is zero.

FIG. 5 is a graph indicating an electric field distribution along the length directions of the conductor pattern 12. The electric field distribution illustrated in FIG. 5 corresponds to the current distribution illustrated in FIG. 4. As illustrated in FIG. 5, when the distance "Lab" from the zero point "a" to the intersection point "b" running along the length directions of the conductor pattern 12 is set to a half of the wavelength λ of the radio wave used for the antenna 1, the electric field generated at the zero point "a" is maximum in a plus direction, and the electric field generated at the intersection point "b" is maximum in a minus direction. Thus, upon feeding power to the feeding point 12a, in a space "S" between the feeding-side extension part 20 and the open-end-side extension part 23, the electric field generated at the zero point "a" and that generated at the intersection point "b" are radiated in the same direction and combined.

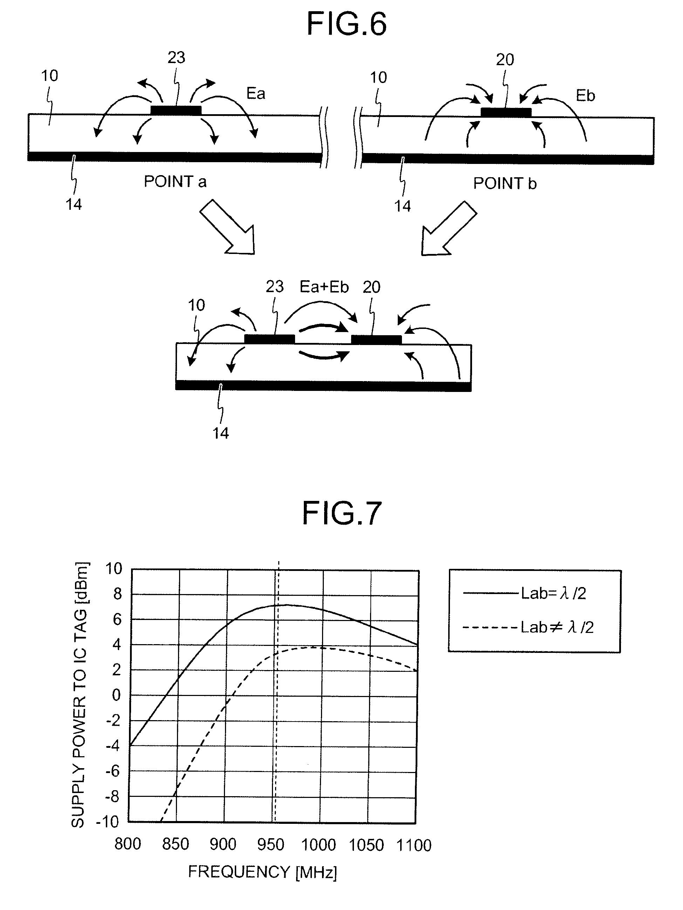

FIG. 6 is a schematic diagram of a combined state of the electric fields generated at the zero point "a" and at the intersection point "b". FIG. 6 schematically depicts a vertical cross section of the antenna 1 taken along the virtual straight line "V" illustrated in FIG. 3.

As depicted in the upper left of FIG. 6, the strength of the electric field generated at the zero point "a" is at a maximum value "Ea". A direction of that electric field is in the plus direction, that is, in a direction away from the open-end-side extension part 23. As depicted in the upper right of FIG. 6, the strength of the electric field generated at the intersection point "b" is at a maximum value "Eb" (= "Ea"). A direction of the electric field is in the minus direction, that is, in a direction toward the feeding-side extension part 20.

That is, the electric field generated at the zero point "a" and that generated at the intersection point "b" are both directed from the left side to the right side of FIG. 6 in the space "S" between the open-end-side extension part 23 and the feeding-side extension part 20, that is, from the open-end-side extension part 23 to the feeding-side extension part 20. Accordingly, as depicted in the bottom of FIG. 6, the electric field generated at the zero point "a" and that generated at the intersection point "b" both act to strengthen each other in the space "S". As a result, both of the electric fields generated at the zero point "a" and the intersection point "b" are combined in the space S, and the strength of the combined electric fields becomes Ea + Eb. The electric field strength Ea + Eb of the combined electric fields has thus been increased up to a value that enables communications with the IC tag 2 (see FIG. 2) mounted on the substrate 10.

Thus, in the present antenna, the distance "Lab" from the zero point "a" to the intersection point "b" running along the length directions of the conductor pattern 12 is set at the distance so that the strength of the electric field generated as a combination of both of the electric fields generated at the zero point "a" and intersection point "b" upon the feeding of power enables communications with the IC tag 2. That is, the distance "Lab" is set to a half of the wavelength λ of the radio wave used for the antenna 1. In other words, the feeding-side extension part 20 and the open-end-side extension part 23 are arranged in juxtaposition with each other such that upon feeding power to the feeding point 12a, both of the electric fields generated at the zero point "a" and the intersection point "b" in the space S between the open-end-side extension part 23 including the zero point "a" and the feeding-side extension part 20 including the intersection point "b" strengthen each other to an extent that enables communications with the IC tag 2. Accordingly, the strength of the electric field between the feeding-side extension part 20 and the open-end-side extension part 23 in juxtaposition with each other is locally increased. Therefore, even when an inexpensive substrate having a low dielectric-constant (e.g., FR-4 or the like) is used, reduction in the radiation power can be prevented while suppressing a size increase of the antenna 1.

Results of examining supply power (radiation power) to the IC tag 2 using a reader-write device connected to the antenna 1 is described next. FIG. 7 is a graph indicating a relation between power supplied from the antenna 1 to the IC tag 2 and frequency, when the IC tag 2 is placed on the antenna 1 (see FIG. 2). In FIG. 7, a power input from the reader-writer device to the antenna 1 is 10 dBm.

As illustrated in FIG. 7, when the distance "Lab" from the zero point "a" to the intersection point "b" running along the length directions of the conductor pattern 12 is set to a half of the wavelength λ of the radio wave used for the antenna 1, a supply power to the IC tag 2 at a UHF-frequency of 952 megahertz is approximately 7.5 dBm. When the distance "Lab" is not a half of the wavelength λ of the radio wave used for the antenna 1, the supply power to the IC tag 2 at the UHF-frequency of 952 megahertz is approximately 3.5 dBm. From these results, it is confirmed that the supply power obtained when the distance "Lab" is set to 1/2·λ is approximately 4 dBm higher that the supply power obtained when the distance "Lab" is not set to 1/2·λ.

That is, when the distance "Lab" is set to 1/2·λ, the electric fields generated at the zero point "a" and at the cross pont "b" become the maximum values of opposite polarities (see FIGS. 4 to 6). Thus, it becomes possible to enhance as much as possible the effect of the local increase in the strength of the electric field between the feeding-side extension part 20 and the open-end-side extension part 23 in juxtaposition with each other.

When the distance "Lab" is not set to 1/2·λ, the supply power to the IC tag 2 is reduced. This is because both of the electric fields generated at the zero point "a" and the intersection point "b" become less than the maximum values, and thus the strength of the electric field generated as the combination of the electric fields generated at the zero point "a" and the intersection point "b" is weakened in the space S between the feeding-side extension part 20 and the open-end-side extension part 23.

Accordingly, it is preferable to select, as the distance "Lab", a value at which the strength of the electric field generated as the combination of the electric fields generated at the zero point "a" and the intersection point "b" upon feeding power does not become less than a value that enables communications with the IC tag 2. That is, even when the distance "Lab" is not a half of the wavelength λ of the radio wave used for the antenna 1, it is preferable that the distance "Lab" is set equal to or more than 1/4 and equal to or less than 3/4 of the wavelength λ of the radio wave used for the antenna 1. By setting the distance "Lab" equal to or more than 1/4 and equal to or less than 3/4 of the wavelength λ of the radio wave used for the antenna 1, the strength of the electric field generated as the combination of the electric fields generated at the zero point "a" and the intersection point "b" is retained at a value not less than a value that enables communications with the IC tag 2, in the space S between the feeding-side extension part 20 and the open-end-side extension part 23.

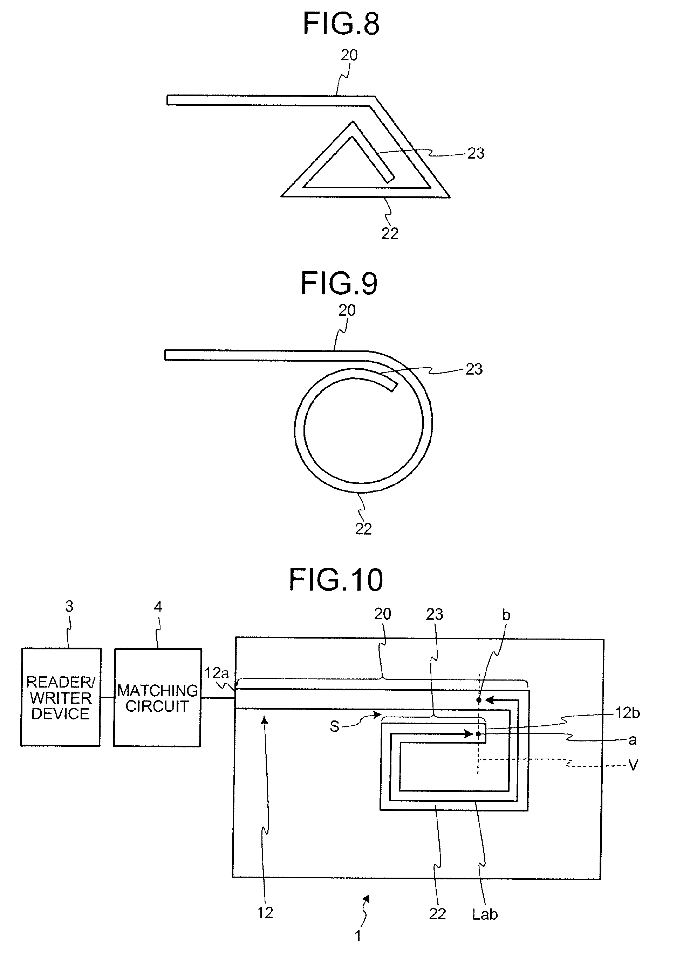

In the present antenna, the spiral part 22 is quadrangular, but a polygonal shape such as a triangular shape illustrated in FIG. 8 or a circular shape illustrated in FIG. 9 may be adopted.

As illustrated in FIG. 10, the antenna 1 is connected to a reader/writer device 3 via the feeding point 12a. The antenna 1 is preferably connected to the reader/writer device 3 through a matching circuit 4 having an impedance of 50 ohms, for example. By arranging the matching circuit 4 between the antenna 1 and the reader/writer device 3, matching of the impedance between the antenna 1 and the reader/writer device 3 is facilitated, and the performance of the reader/writer device 3 is effectively exercised.

An application example of an antenna including the conductor pattern 12 according to the present antenna is explained. FIGS. 11 and 12 are schematic diagrams of the application example of the antenna including the conductor pattern 12. The same reference signs are used to refer to parts identical to those explained above to omit any redundant explanations.

As illustrated in FIG. 11, an antenna 5 according to the application example includes on a substrate 110 made of a dielectric substance, a plurality of the conductor patterns 12 disposed in a matrix. A two-dimensional position of each conductor pattern 12 on the substrate 110 is defined in advance. The conductor patterns 12 are each electrically connected to a reader/writer device 6 via wirings 5a to 5c connected to the feeding point 12a. Due to such a configuration, when the IC tag (not illustrated) is placed at the position of any one of the conductor patterns 12 on the substrate 110, the reader/writer device 6 is able to easily identify the position of the IC tag on the substrate 110 based on a signal received via the wirings 5a to 5c from the conductor pattern 12 at which the IC tag is placed.

In an application example illustrated in FIG. 12, a change-over switch 7 is disposed between the antenna 5 and the reader/writer device 6 illustrated in FIG. 11. The change-over switch 7 is connected via the wirings 5a to 5c to the antenna 5, that is, to the plurality of conductor patterns 12, and also, connected via a wiring 7a to the reader/writer device 6. The change-over switch 7 selectively transmits to the reader/writer device 6 signals transmitted via the wirings 5a to 5c from the plurality of conductor patterns 12. For example, when the change-over switch 7 selects the signal from the three conductor patterns 12 on the very left side of FIG. 12 on the substrate 110, the signals from the remaining conductor patterns 12 are not transmitted to the reader/writer device 6. Therefore, a position of an IC tag T1 placed in the middle of the left side of FIG. 12 is identified by the reader/writer device 6, but a position of an IC tag T2 placed at the bottom right of FIG. 12 is not identified by the reader/writer device 6. Accordingly, by connecting the plurality of conductor patterns 12 via the change-over switch 7 to the reader/writer device 6, various approaches for identifying positions of IC tags are possible.

## Claims

1. A reader-writer device comprising:
a reader-writer (3; 6) configured to be communicable with a wireless tag; and
an antenna (1; 5) connected to the reader-writer (3; 6) and configured to be communicable with the wireless tag, the antenna (1; 5) comprising:
a substrate (10; 110) made of a dielectric substance; and
a conductor pattern (12) formed on the substrate (10; 110) and including
a feeding point (12a) at one end of the conductor pattern (12), via which the antenna (1; 5) is connectable to the reader-writer device (3; 6),
an open end (12b) at another end of the conductor pattern (12),
a ground (14) formed on a surface of the substrate (10; 110) which surface is opposite to the surface on which the conductor pattern (12) is formed,
**characterised in that** the conductor pattern further includes
a feeding-side extension part (20) extending for a first predetermined distance from the feeding point (12a), and
a spiral part (22) extending spirally in a spiral shape from an opposite end of the feeding-side extension part (20) opposite to the feeding point (12a) to the open end (12b) being a terminal end of the spiral part (22), the spiral part (22) including the open end (12b) and an open-end-side extension part (23) positioned in juxtaposition with, and parallel to, the feeding-side extension part (20) with a predetermined interval therebetween; and
a distance (Lab) along length directions of the conductor pattern (12), from a zero point (a), which zero point is located close to the open end (12b) of the open-end-side extension part (23) and is the point at which a current is zero upon feeding power to the feeding point (12a), to an intersection point (b) at which a virtual straight line (V) perpendicular to the open-end-side extension part (23) and passing through the zero point (a) intersects the feeding-side extension part (20), is set to a second predetermined distance which is equal to λ/2, where λ is a wavelength acquired by a wavelength in free space of a radio wave used for the antenna (1; 5) being compressed to 1/√ε and ε is a dielectric constant of the substrate (10; 110); and wherein upon feeding power to the feeding point (12a), an electric field (Ea) generated at the zero point (a) and an electric field (Eb) generated at the intersection point (b) are combined in the interval (S) such that the strength of the combined electric field becomes Ea + Eb.

2. The antenna (1; 5) according to claim 1, wherein the spiral part (22) is polygonal in shape.

3. The antenna (1; 5) according to claim 1, wherein the spiral part (22) is circular in shape.

## Patentansprüche

1. Eine Lese-Schreib-Vorrichtung, umfassend:
eine Lese-Schreib-Einheit (3; 6), ausgebildet, um mit einem drahtlosen Kennsatz kommunizieren zu können; und
eine Antenne (1; 5), verbunden mit der Lese-Schreib-Einheit (3; 6) und ausgebildet, um mit dem drahtlosen Tag kommunizieren zu können, wobei die Antenne (1; 5) umfasst:
ein Substrat (10; 110) gebildet aus einer dielektrischen Substanz; und
ein Leitermuster (12), ausgebildet auf dem Substrat (10; 110) und umfassend
einen Zuführungspunkt (12a) an einem Ende des Leitermusters (12), über welchen die Antenne (1; 5) mit der Lese-Schreib-Vorrichtung (3; 6) verbindbar ist,
ein offenes Ende (12b), an einem anderen Ende des Leitermusters (12),
eine Erdung (14), ausgebildet auf einer Oberfläche des Substrats (10; 110), deren Oberfläche entgegengesetzt zu der Oberfläche ist, auf der das Leitermuster (12) ausgebildet ist,
**dadurch gekennzeichnet, dass** das Leitermuster weiter umfasst
einen Zuführungsseiten-Verlängerungsabschnitt (20), welcher sich um eine erste vorbestimmte Distanz von dem Zuführungspunkt (12a) aus erstreckt, und
einen Spiralabschnitt (22), welcher sich spiralförmig in einer Spiralform von einem entgegengesetzten Ende des Zuführungsseiten-Verlängerungsabschnitts (20), welches dem Zuführungspunkt (12a) entgegengesetzt ist, bis zu dem offenen Ende (12b) erstreckt, was ein Abschlussende des Spiralabschnitts (22) ist, wobei der Spiralabschnitt (22) das offene Ende (12b) und einen Offene-Ende-Seite-Verlängerungsabschnitt (23) umfasst, welcher in einer Nebeneinanderstellung mit und parallel zu dem Zuführungsseiten-Verlängerungsabschnitt (20) mit einem vorbestimmten Intervall dazwischen positioniert ist; und
eine Distanz (Lab), entlang Längenrichtungen des Leitermusters (12), von einem Nullpunkt (a), wobei der Nullpunkt nahe dem offenen Ende (12b) des Offene-Ende-Seiten-Verlängerungsabschnitts (23) positioniert ist und der Punkt ist, bei welchem ein Strom auf ein Zuführen von Energie zu dem Zuführungspunkt (12a) gleich null ist, zu einem Kreuzungspunkt (b), bei welchem eine virtuelle gerade Linie (V), welche senkrecht zu dem Offene-Ende-Seiten-Verlängerungsabschnitt (23) ist und durch den Nullpunkt (a) hindurchführt, den Zuführungsseiten-Verlängerungsabschnitt (20) schneidet, auf eine zweite vorbestimmte Distanz eingestellt ist, welche gleich λ/2 ist, wobei eine durch eine Wellenlänge im freien Raum einer für die Antenne (1; 5) verwendeten Funkwelle erfasste Wellenlänge ist, welche auf 1/√ε komprimiert ist, und ε eine dielektrische Konstante des Substrats (10; 110) ist; und wobei auf ein Zuführen von Energie zu dem Zuführungspunkt (12a), ein an dem Nullpunkt (a) erzeugtes elektrisches Feld (Ea) und ein an dem Kreuzungspunkt (b) erzeugtes elektrisches Feld (Eb) in dem Intervall (S) so kombiniert sind, dass die Stärke des kombinierten elektrischen Feldes gleich Ea + Eb ist.

2. Antenne (1; 5) gemäß Anspruch 1, wobei der Spiralabschnitt (22) in der Form eines Polygons ist.

3. Antenne (; 5) gemäß Anspruch 1, wobei der Spiralabschnitt (22) in der Form eines Kreises ist.

## Revendications

1. Dispositif de lecture-écriture comprenant :
un module de lecture-écriture (3 ; 6) configuré de manière à être en communication avec une étiquette sans fil ; et
une antenne (1 ; 5) connectée au module de lecture-écriture (3 ; 6) et configurée de manière à être en communication avec l'étiquette sans fil, l'antenne (1 ; 5) comprenant :
un substrat (10 ; 110) constitué d'une substance diélectrique ; et
un tracé conducteur (12) formé sur le substrat (10 ; 110) et incluant :
un point d'alimentation (12a) à une extrémité du tracé conducteur (12), par l'intermédiaire duquel l'antenne (1 ; 5) peut être connectée au dispositif de lecture-écriture (3 ; 6) ;
une extrémité ouverte (12b), à une autre extrémité du tracé conducteur (12) ;
une masse (14) formée sur une surface du substrat (10 ; 110), laquelle surface est opposée à la surface sur laquelle le tracé conducteur (12) est formé ;
**caractérisé en ce que** le tracé conducteur inclut en outre :
une partie d'extension côté alimentation (20) se prolongeant sur une première distance prédéterminée à partir du point d'alimentation (12a) ; et
une partie en spirale (22) se prolongeant en spirale dans une forme de spirale, d'une extrémité opposée de la partie d'extension côté alimentation (20) opposée au point d'alimentation (12a) à l'extrémité ouverte (12b) qui correspond à une extrémité terminale de la partie en spirale (22), la partie en spirale (22) incluant l'extrémité ouverte (12b) et une partie d'extension côté extrémité ouverte (23) positionnée en juxtaposition avec, et en parallèle à, la partie d'extension côté alimentation (20), avec un intervalle prédéterminé entre elles ; et
une distance (Lab) le long de directions de longueur du tracé conducteur (12), depuis un point zéro (a), lequel point zéro est situé à proximité de l'extrémité ouverte (12b) de la partie d'extension côté extrémité ouverte (23) et correspond au point au niveau duquel un courant est nul suite à l'alimentation en énergie du point d'alimentation (12a), jusqu'à un point d'intersection (b) au niveau duquel une ligne droite virtuelle (V), perpendiculaire à la partie d'extension côté extrémité ouverte (23) et passant à travers le point zéro (a), coupe la partie d'extension côté alimentation (20), est définie sur une seconde distance prédéterminée qui est égale à λ/2, où λ est une longueur d'onde acquise par une longueur d'onde dans l'espace libre d'une onde radioélectrique utilisée pour l'antenne (1 ; 5) comprimée à 1/√ε, et ε est une constante diélectrique du substrat (10 ; 110) ; et dans lequel suite à l'alimentation en énergie du point d'alimentation (12a), un champ électrique (Ea) généré au niveau du point zéro (a) et un champ électrique (Eb) généré au niveau du point d'intersection (b) sont combinés dans l'intervalle (S) de sorte que l'intensité du champ électrique combiné devient Ea + Eb.

2. Antenne (1 ; 5) selon la revendication 1, dans laquelle la partie en spirale (22) est de forme polygonale.

3. Antenne (1 ; 5) selon la revendication 1, dans laquelle la partie en spirale (22) est de forme circulaire.
